# EUROPEAN PATENT APPLICATION

(11) **EP 1 462 945 A1**
(43) Date of publication of application: **29.09.2004**
(21) Application number: 02783772.3
(22) Date of filing: 04.12.2002
(51) Int. Cl.: G06F 13/00

(54) **COMMUNICATION INFORMATION SHARING SYSTEM, COMMUNICATION INFORMATION SHARING METHOD, COMMUNICATION INFORMATION SHARING PROGRAM**

(30) Priority: 05.12.2001 JP 2001371141
(71) Applicant: Cybird Co., Ltd, Tokyo 106-6122 (JP)
(72) Inventor: TERADA, Shinji, c/o CYBIRD CO., LTD., Minato-ku, Tokyo 106-6122 (JP)
(74) Representative: Leson, Thomas Johannes Alois, Dipl.-Ing.
(86) International application number: PCT/JP2002/012719
(87) International publication number: WO 2003/048945

(57) **Abstract**

A communication information sharing system according to the invention includes a first user terminal which first transmits a conversational sentence, a second user terminal which first receives a conversational sentence, and a management server which perform information management so that both terminals can display their mutual characters on the respective terminals.

## Description

### Technical Field

The present invention relates to information communication which is performed between terminals connectable to a network.

### Background Art

In recent years, as the Internet has become popular, terminals connectable to the Internet (networks) have become rapidly popular. As such terminals, mobile telephones, PDAs (Personal Digital Assistants), notebook personal computers and the like can be enumerated.

In addition, owing to these terminals, electronicmails (e-mails) and chat for exchange of messages (conversational sentences) between terminals have become frequently used.

Incidentally, chat is also called on-line talk, and character data which constitute a message can be sent on line to a remote terminal, and electronic mails can send not only character data but also image data and music data.

However, mobile telephones are narrow in communication bandwidth and lack stability, and are in some cases somewhat unsuitable for frequent exchanges of large data like image data, because the exchange of large data takes time or for other reasons.

### Disclosure of the Invention

A system has been proposed which is operative to liven up conversation between the above-mentioned terminals by causing a character which is set for each of the terminals to be displayed on the other, during communication (chat) of messages (conversational sentences) therebetween.

In the fieldof communications usingpersonal computers, a network chat system is known in which a user sets a character called avatar and allows this character to freely roam on the virtual world and have a conversation with another character.

In the case of this network chat system, it has been general to use characters by downloading previously-selected characters or by installing on personal computers character data distributed on media such as CD-ROMs.

In addition, as broadband communications have become available and high-capacity transmission has become realized, it has also become possible to transmit a character itself as streaming data to a remote terminal and dynamically display the character thereon.

In the case where chat using such characters is to be realized with small terminals such as mobile telephones and PDAs (Personal Digital Assistants), by what method a character set by a user should be displayed on a terminal of a remote user is expected to become a problem.

Specifically, the storage capacities of mobile telephones are small compared to personal computers. For this reason, there is, for example, the problem that a large amount of data of characters to be used by remote users cannot be stored in mobile terminals.

In addition, in the case where a character set by a user does not exist as data in the memory of a terminal of a remote user, how the character should be downloaded into the terminal of the remote user becomes a problem.

Namely, it has been demanded to realize an art which enables each of users to appropriately display his/her desired character on the terminals of the other in the case where they enjoy chat using their characters.

The invention has been made in view of the above-mentioned matters, and a problem to be solved by the invention is to provide a communication information sharing system, a communication information sharing method, and a communication information sharing program all of which enable information which is a communication object to be easily shared between terminals.

The invention also provides a communication information sharing system, a communication information sharing method, and a communication information sharing program all of which enable information which is a communication object to be appropriately displayed between terminals which perform communication.

Further, the invention provides a communication information sharing system, a communication information sharing method, and a communication information sharing program all of which enable a remote communication terminal to be easily and quickly identified.

The invention adopts the following means to solve the above-mentioned matters. Namely, in the case of transmitting, among at least two terminals, information as well as signs and images that are symbolic of a terminal, the invention is a communication information sharing system which enables signs and images mutually transmitted between terminals to be mutually output at the respective terminals.

Specifically, the invention is a communication system which includes at least two user terminals connected via a network to perform communication of data therebetween, and a management server which performs management of identifiers added to information symbolic of the respective user terminals.

The construction of the communication system includes transmitting means for transmitting an identifier together with data, receiving means for receiving an identifier, identifier storing means for storing the received identifier, identifier sharing means for causing an identifier to be returned to another of the user terminals to coincide with an identifier stored in the identifier storing means, i.e., an identifier transmitted from one of the user terminals, replying means for returning the identifier, receiving means for receiving the identifier, acquiring means for acquiring information associated with the identifier, and outputting means for outputting the information.

The identifiers which identify these user terminals are identifiers indicative of contents registered during user registration performed by users, and identifiers indicative of the capabilities of the individual terminals. As these identifiers, it is possible to enumerate identifiers indicative of user ID, IP (Internet Protocols) addresses, user passwords, and specifications, such as kind and model, of the user terminals, identifiers indicative of ID numbers unique to the individual terminals, or the like. Incidentally, in the case where the terminals are mobile telephones, its telephone numbers can be used as the respective identifiers.

The reason why these identifiers indicative of the specifications of the terminals are stored in the identifier storing means is that the specifications of the terminals contain small differences depending on the manufacturing makers of the terminals or the kinds thereof.

For example, in the case where information associated with a transmitted identifier is an image, some kinds of images cannot be displayed, because different kinds of terminals use liquid crystal displays which differ in performance (such as picture size, the number of pixels and the number of display colors).

However, by storing the identifiers indicative of the specifications in the identifier storing means in this manner, it is also possible to determine whether a remote terminal can output information.

In addition, the identifier storing means in the invention stores identifiers which identify the respective user terminals, and identifiers indicative of links to other servers which manage characters associated with the respective identifiers.

The identifiers of links to other servers which manage information associated with the respective identifiers are identifiers indicative of links to sites from which to download characters, links to portal sites, and the like in the case where, for example, information associated with the identifier is a character.

The management server of the invention may also include identifier sharing means for causing identifiers of both user terminals to coincide with each other so that personal information having an identifier transmitted from one of the user terminals can be outputted at another of the user terminals. This personal information is preferably information relative to a schedule or information relative to an address.

Furthermore, the identifier storing means of the invention may store identifiers of links to servers or databases which manage personal information associated with identifiers.

According to this construction, it is possible to prevent personal information from being erroneously transmitted. In addition, in the case where schedules and addresses are managed by a database in a user terminal, it is possible to prevent a schedule or an address from being erroneously inputted by a user, by directly accessing this database.

Furthermore, in the identifier storing means, as identifier associated with the identifiers which identify the user terminals, for example, personal information such as age, sex and address, i.e., user attribute information, can be enumerated.

Incidentally, it is also possible to adopt a construction in which these identifiers indicative of user attributes are issued by issuing means provided in the management server.

The invention is also the above-mentioned management server. Namely, the management server according to the invention includes receiving means for receiving an identifier transmitted from a user terminal, identifier storing means for storing the identifier, identifier sharing means for causing the stored identifier and an identifier to be returned to another user terminal to coincide with each other, guiding means for performing guidance for acquiring, on the basis of the identifier, information associated with the identifier, and transmitting means for transmitting the coincident identifier to another user terminal.

In addition, in the management server of the invention, when an identifier to be transmitted is not stored in the identifier storing means, i.e., the first identifier that has been transmitted, the identifier is registered by registering means for registering identifiers in predetermined identifier storing means.

In this manner, by storing and registering identifiers in the identifier storing means of the management server, as long as an identifier transmitted from a data-transmitting-side user terminal is not altered, a data-receiving-side user terminal may store only information corresponding to the transmitted identifier in itself.

In addition, the management server of the invention may be constructed to have updating means for updating registration of identifiers, in preparation for the case where an identifier transmitted from the data-transmitting-side user terminal is altered.

As identifiers which can be altered, it is possible to enumerate, in addition to identifiers associated with information symbolic of terminals, identifiers indicative of the specifications of terminals necessary when a user changes the kinds of terminals.

In addition, the invention is also a user terminal which transmits information and a user terminal which receives information. Namely, each of the user terminals in the invention is characterized by including identifier storing means for storing information symbolic of a remote communication terminal and an identifier associated with the information, and comparing means for comparing the information with information stored previously in the identifier storing means, and the user terminal acquires predetermined information on the basis of a comparison result.

The invention is also a communication information sharing system which enables at least two user terminals to communicate characters associated with identifiers, when the at least two user terminals are to communicate conversational sentences, as by chat or an electronic mail which performs communication of conversational sentences and characters in real time. The construction of the communication information sharing system includes transmitting means for transmitting identifiers associated with characters symbolic of the respective user terminals together with conversational sentences, receiving means for receiving the identifiers, identifier sharing means for causing an identifier to be returned to another of the user terminals to coincide with an identifier transmitted from one of the user terminals, replying means for returning the coincident identifier, receiving means for receiving the identifier, acquiring means for acquiring a character associated with the identifier, and display means for displaying the character.

Since the identifier sharing means for causing a transmitted identifier and an identifier to be transmitted to coincide with each other is provided in this manner, characters (information) associated with mutualidentifiers between user terminals which perform communication of data can be outputted to the respective terminals, namely, the characters can be shared between the user terminals.

In addition, by realizing the sharing of information, it is possible to reduce the number of times of troublesome operations such as direct downloading of images in communication environments like mobile telephones which are narrow in bandwidth and lack stability.

Furthermore, the management server is provided with the guiding means as described above, and when a transmitted identifier and an identifier to be transmitted are to be made coincident with each other, if the transmitted identifier is not stored in the identifier storing means, a link to another server which manages identifier storing means in which the identifier is stored is established by the guiding means. Then, the user terminal downloads the necessary character (information).

Accordingly, if a user terminal which is a remote communication terminal does not have a character (information) of a terminal which has transmitted data, downloading needs only to be performed at each time, whereby the character of the remote communication terminal can be positively displayed on the display device of the terminal.

In addition, since the necessary character needs only to be downloaded as the need arises, even in the case of a terminal with a small memory capacity such as a mobile telephone, it is possible to avoid the problem that the terminal cannot register a character of a remote communication terminal because of its shortage of memory and cannot display the character.

In addition, each of terminals which communicate with each other can display (output) a character (information) symbolic of itself on the other, whereby each of the terminals can be easily notified which user is accessing it.

Of course, the information associated with the identifiers may be not only characters but also images of users. In the case where the faces of users are displayed, each of the users can clearly know which user is particularly now talking with him/her.

It is also possible to adopt a construction which varies these characters and images according to conversation. For example, in the case where the face of a human or an animal is displayed as a character, it is possible to adopt a movement such as the movement of the mouth according to conversation. Incidentally, the characters and the images may be either two-dimensional or three-dimensional. In addition, it is also possible to adopt a construction which adds sound effects or music to these characters and images. Of course, a construction which outputs only sound effects and music may also be adopted.

Furthermore, the invention is also a communication method to be performed by at least two user terminals connected via a network to perform communication of conversational sentences therebetween, and a management server which performs management of identifiers added to characters symbolic of the respective user terminals.

A specific method includes a step of transmitting the identifiers together with the conversational sentences, a step of receiving the identifiers, a step of causing an identifier to be returned to another of the user terminals to coincide with an identifier transmitted from one of the user terminals, a step of returning the coincident identifier, a step of receiving the identifier, a step of acquiring a character associated with the identifier, and a step of displaying the character on a display device of said another user terminal.

The invention is also a program computer-executable by at least two user terminals connected via a network to perform communication of conversational sentences therebetween, and a management server which performs management of identifiers added to a character symbolic of the respective user terminals

This program includes a step of transmitting the identifiers together with the conversational sentences, a step of receiving the identifiers, a step of causing an identifier to be returned to another of the user terminals to coincide with an identifier transmitted from one of the user terminals, a step of returning the coincident identifier, a step of receiving the identifier, a step of acquiring a character associated with the identifier, and a step of displaying the character on a display device of said another user terminal.

The invention is also an information sharing method including a step of receiving personal information, a step of causing the identifier added to the personal information to coincide with an identifier of personal information to be returned to another of the user terminals, a step of returning personal information based on the coincident identifier, a step of receiving the personal information, a step of editing the personal information, a step of transmitting the personal information to another of the user terminals, and a step of displaying the personal information on a display device of the user terminal.

In addition, the invention is also a program to be executed by a computer of a management server which performs management of identifiers added to personal information inputted from at least two user terminals connected via a network to perform communication of conversational sentences therebetween.

This program includes a step of transmitting personal information to which an identifier is added, together with a conversational sentence, a step of receiving the personal information, a step of causing the identifier added to the personal information to coincide with an identifier of personal information to be returned to another of the user terminals, a step of returning personal information based on the coincident identif ier, a step of receiving the personal information, a step of editing the personal information, a step of transmitting the personal information to another of the user terminals, and a step of displaying the personal information on a display device of the user terminal.

As is apparent from the above description, according to the invention, it is possible to provide a communication information sharing system, a communication information sharing method, and a communication information sharing program all of which enable information which is a communication object to be easily shared between a plurality of terminals.

In addition, according to the invention, it is also possible to provide a communication information sharing system, a communication information sharing method, and a communication information sharing program all of which enable information (character) which is a communication object to be appropriately displayedbetween terminals which perform communication.

Further, according to the invention, it is possible to provide a communication information sharing system, a communication information sharing method, and a communication information sharing program all of which enable a remote communication terminal to be easily and quickly identified.

### Brief Description of Drawings

Fig. 1 is a system conceptual diagram of a communication information sharing system according to a first embodiment;
Fig. 2 is a functional block diagram of the communication information sharing system according to the first embodiment and a second embodiment;
Fig. 3 is a hardware construction diagram of a management server according to the first embodiment and the second embodiment;
Fig. 4 is a flowchart of the sequence in which a first user terminal in the first embodiment acquires a character of a second user terminal;
Fig. 5 is a flowchart of the sequence in which the first user terminal in the first embodiment acquires the character of the second user terminal;
Fig. 6 is a flowchart of the sequence in which the second user terminal in the first embodiment acquires a character of the first user terminal;
Fig. 7 is a flowchart of the sequence in which the first user terminal in the first embodiment acquires the character of the second user terminal;
Fig. 8 is a conceptual diagram concerning a character acquiring method according to the first embodiment;
Fig. 9 is a system conceptual diagram concerning a communication information sharing system according to the second embodiment;
Fig. 10 is a flowchart showing the processing process of the communication information sharing system according to the second embodiment; and
Fig. 11 is a flowchart showing the processing process of the communication information sharing system according to the second embodiment.

### Best Mode for Carrying Out the Invention

Communication information sharing systems according to the present embodiments will be described below. In the following description, in addition to the communication information sharing systems according to the present embodiments, communication information sharingmethods such as execution sequences for the communication information sharing systems will be described.

### <First Embodiment>

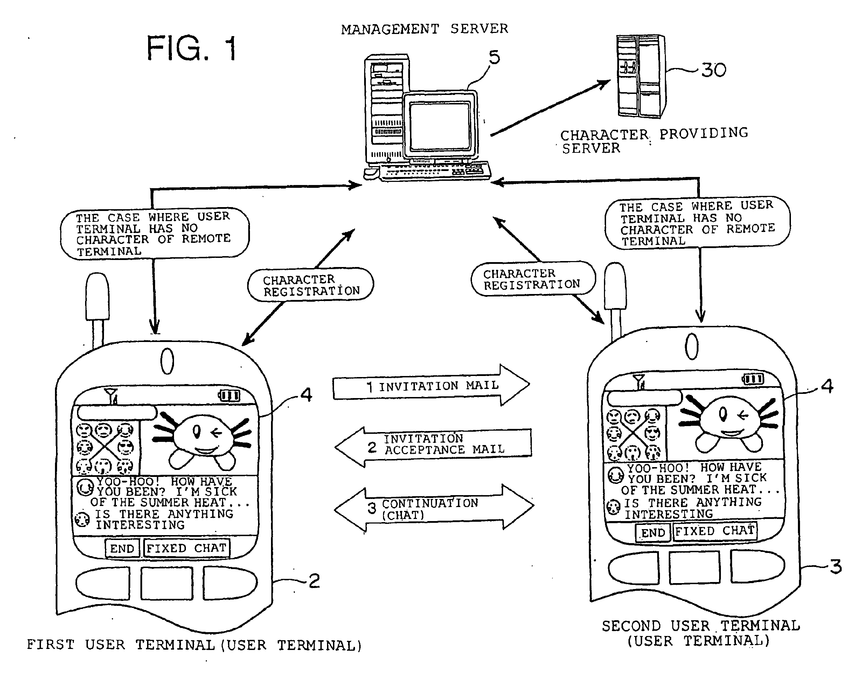

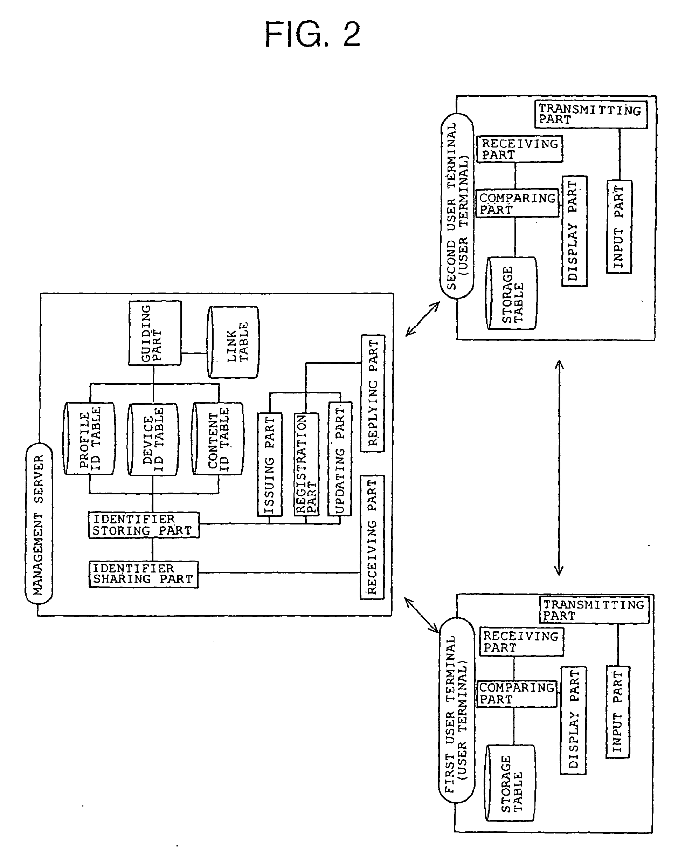

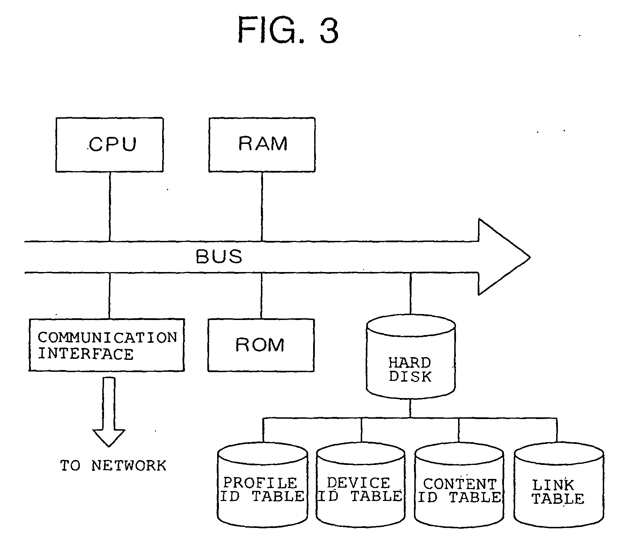

First, a communication information sharing system 1 according to the present embodiment will be schematically described with reference to Figs. 1 to 3. Fig. 1 shows a schematic view of the communication information sharing system 1 according to the present embodiment, Fig. 2 shows a functional block diagram of the communication information sharing system 1 according to the present embodiment, and Fig. 3 shows a hardware construction diagram of the communication information sharing system 1 according to the present embodiment.

As shown in Fig. 1, the communication information sharing system 1 according to the present embodiment uses, as communication means, chat which enables conversational sentences to be communicated in real time between a user terminal (hereinafter referred to as the first user terminal) 2 which first transmits a conversational sentence and a user terminal (hereinafter referred to as the second user terminal) 3 which first receives a conversational sentence.

Each of the first user terminal 2 and the second user terminal 3 has a character image (hereinafter referred to as the character) for identifying a respective one of the terminals. Incidentally, this character image 4 may use not only an existing character but also a character originally created by an individual, or may use any other image, such as a photograph of a user's face, with which a user terminal can be identified / specified.

Further, the communication information sharing system 1 according to the present embodiment is provided with a management server 5 which performs information management between both user terminals, so that the first user terminal 2 and the second user terminal 3 can display the mutual characters 4 on the respective terminals.

As shown in Fig. 1, if the mutual user terminals do not have the respective characters indicative of the first user terminal 2 and the second user terminal 3, this management server 5 downloads the necessary character 4 and causes the character 4 to be shared between both user terminals.

The construction of the communication information sharing system 1 according to the present embodiment will be described below with reference to Fig. 2. First of all, the first user terminal 2 and the second user terminal 3 will be described. In the following description, since the first user terminal 2 and the second user terminal 3 have similar system constructions, both user terminals will be collectively referred to as the user terminal.

As shown in Fig. 2, the user terminal has a receiving part (receiving means) 6a, 6b and a transmitting part (transmitting means) 7a, 7b for performing communication of data with a remote communication terminal. In the communication of data, the communication of the characters 4 indicative of the respective terminals, in addition to conversational sentences, is also carried out.

Each of these characters 4 has a plurality of identifiers indicative of the attributes of itself. As the identifiers, for example, an identifier indicative of a link to a character providing server 30 or a provider which handles the characters 4, an identifier indicative of a link to a download server from which the characters 4 canbe downloaded, and the like, can be enumerated.

The user terminal is provided with a storage table (identifier storing means) 8a, 8b which stores these characters 4 and identifiers.

In addition, user information specifying a user terminal which has accessed once is stored in the storage table 8a, 8b. As thisuser information, firstly, information indicative of the specifications of the user terminal, i.e., information such as the kind / the model and the like of the user terminal and information relative to the user terminal such as a telephone number which specifies the user terminal, can be enumerated. Secondly, attribute information on a user associated with the information relative to the user terminal can be enumerated. This user attribute information contains items to be registered during user registration, and in many cases contains personal information on the user such as age, sex, address and telephone number.

In the following description of the present embodiments, the identifiers associated with each of the characters 4 are generally referred to as content IDs, the identifiers attached to the information relative to the user terminals are referred to as device IDs, and the identifiers attached to the attribute information on users are referred to as profile IDs.

Further, the user terminal is provided with a comparing part 9a, 9b which compares and verifies the character 4 stored in the above-mentioned storage table 8a, 8b and the character 4 received from a remote communication terminal. If it is determined that the character 4 received from this comparing part 9a, 9b is similar to the character 4 stored in the storage table, the necessary character 4 is extracted and communicated from the storage table 8a, 8b.

On the other hand, if it is determined that the received character 4 is a character which is not stored in the storage table 8a, 8b, the character 4 needs to be acquired from outside the user terminal.

As means for acquiring the character 4 from outside the user terminal, means which downloads the character 4 from the character providing server 30 which provides the character 4 is most suitable.

In addition, the user terminal is provided with an input part (input means) 10a, 10b for inputting conversational sentences, and a display part (display means) 11a, 11b which displays a conversational sentence or the character 4 transmitted from a remote communication terminal. Incidentally, since the user terminal according to the present embodiment is a mobile telephone, it is assumed that the input part 10a, 10b includes button keys on which figures of 0 to 9 and predetermined signs are respectively displayed, and the display part 11a, 11b is a liquid crystal display.

User terminals each having this construction perform communication of conversational sentences and the characters 4 by means of chat.

The system construction of the management server 5 will be described below. As shown in Fig. 2, the management server 5 has a receiving part (receiving means) 12 which receives various kinds of data transmitted from the first user terminal 2 or the second user terminal 3 and a replying part (replying means) 13 which returns various kinds of processing performed in the management server 5 to the first user terminal 2 or the second user terminal 3.

The management server 5 is also provided with an identifier storing part (identifier storing means) 14 which stores various kinds of identifiers contained in data transmittedfromtheuserterminals. The identifier storing part 14 has a content ID table 15 which stores identifiers associated with the characters 4 transmitted from both user terminals, i.e., content IDs, a device ID table 16 for identifying the individual user terminals, and a profile ID table 17 which stores profile IDs associated with the device IDs.

Furthermore, the management server 5 according to the present embodiment is provided with an issuing part (issuing means) 18 which issues these profile IDs. This issuing part 18, when user registration is performed and various kinds of IDs are sent from the user terminal, creates / issues a profile ID on the basis of user information registered during the user registration.

The profile IDs, the device IDs and the content IDs are all associated with one another. Accordingly, if the management server 5 is to identify a user terminal, the management server 5 can identify the user terminal by tracing transmitted IDs.

Further, the management server 5 is provided with an identifier sharing part (identifier sharing means) 29 which compensates for the difference between IDs so that an ID transmitted from one of the user terminals and an ID to be transmitted from the other coincide with each other.

In this manner, by causing a content ID received by the identifier sharing part 29 and a content ID to be transmitted to coincide with each other, the character 4 of one of the user terminals and the character 4 of the other can be shared by the mutual user terminals.

In addition, the management server 5 is provided with a registration part 19 which registers various kinds of IDs and an updating part 20 which updates registration. If various kinds of IDs transmitted from a user terminal are not stored in the identifier storing part 14, this registration part 19 newly registers the IDs in the identifier storing means.

However, if the IDs transmitted from the user terminal are registered one after another by the registration part 19, which ID is being used by the current user terminal becomes unclear. Namely, what kind of terminal or what character is being used by the user terminal at the present time becomes indefinite, so that a user cannot be identified.

To solve this problem, the updating part (updating means) 20 is provided. For example, if settings are adopted which cause the updating part 20 to update IDs each time an ID is received, constantly new information can be held, and users can be positively identified.

In addition, the management server 5 is provided with a guiding part (guiding means) 21. If the content ID table 15 does not have a content ID associated with the character 4 transmitted from a user, this guiding part 21 performs the processing of downloading the necessary character 4 from a server which performs provision and distribution of the characters 4.

Furthermore, a link table 28 which stores addresses linked to servers which perform provision / distribution of the characters 4, addresses of links to download sites, addresses of links to portal webs, and the like, is provided in the guiding part 21.

The system construction of the management server 5 is as described above. The hardware constructions of the management server 5 and the user terminal (including the transmission-side user terminal and the reception-side user terminal) will be described below.

First, the user terminal will be described below. As shown in Fig. 3, the management server 5 includes a ROM (Read Only Memory) 22 which stores programs for performing various kinds of processing and data such as various kinds of IDs transmitted from the user terminal, a central processing unit (hereinafter referred to as the CPU) 23 which executes the programs stored in this ROM, a RAM (Random Access Memory) 24 which temporarily stores programs and data to be processed by this CPU 23, a hard disk 25 which stores programs and data to be processed by the CPU 23, and a communication interface 26 which performs communication of communication data via a network in accordance with a command from the CPU 23, and the ROM 22, the CPU 23, the RAM 24, the hard disk 25 and the communication interface 26 are connected via a bus (BUS) 27.

This ROM stores not only a main program responsible for controlling the management server 5 but also programs for executing various kinds of functions.

Further, the hard disk 25 stores the content ID table 15, the profile ID table 17, the device ID table 16, and the link table 28 provided in the guiding part 21, all of which are shown in Fig. 2.

The CPU 23, on the basis of the various kinds of programs stored in the ROM, activates the identifier sharing part 29, the registration part 19, the issuing part 18, the updating part 20, the guiding part 21 and the like, to cause them to execute their processing. The hardware construction of the management server 5 is as described above.

The hardware construction of the user terminal will be described below. Since the hardware construction of the user terminal is nearly the same as the hardware construction of the management server 5, the illustration of the hardware construction of the user terminal is omitted.

The hardware construction of the user terminal (the transmission-side user terminal, the reception-side user terminal) according to the present embodiment includes a CPU, a ROM and a communication interface, similarly to the hardware construction of the above-described management server 5. This CPU performs control processing of the above-mentioned various kinds of functions of the user terminal.

Furthermore, the user terminal has a volatile RAM and a non-volatile RAM. A storage table is stored in this non-volatile RAM. In addition, the user terminal has an input part and a display part connected to each other via a bus.

The CPU 23 activates / executes the input part, the display part, a comparing part and the like by executing predetermined programs. The hardware construction of the user terminal is as described above.

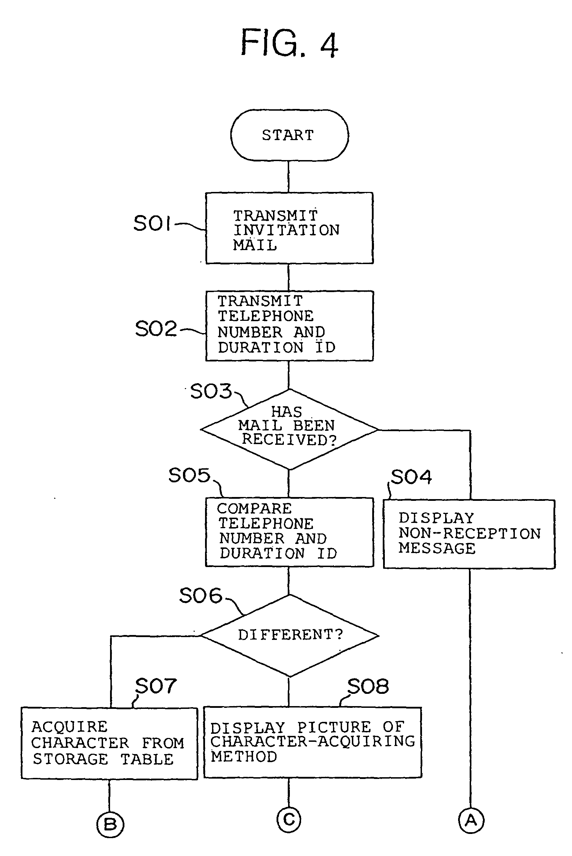

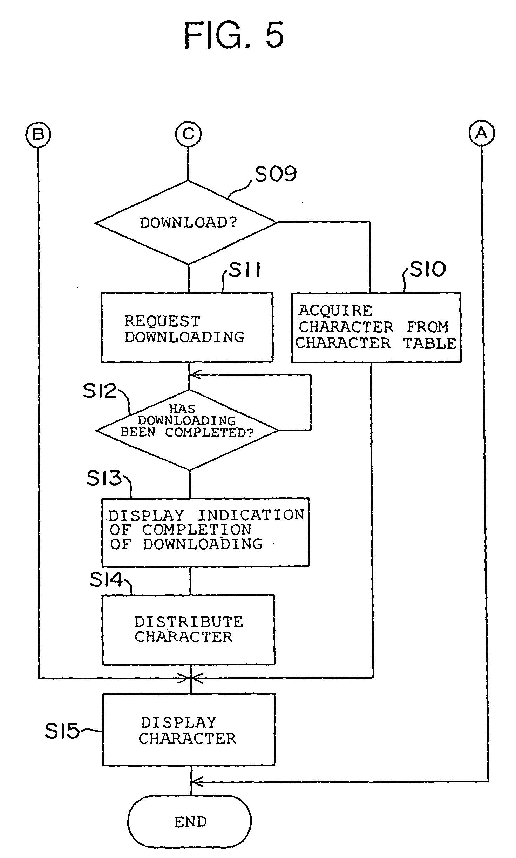

A communication information sharing method which operates the communication information sharing system 1 according to the present embodiment will be described with reference to the flowchart shown in Figs. 4 and 5.

First, the CPU, not shown, of the first user terminal 2 executes the processing of transmitting a mail which invites the second user terminal 3 to perform continuous communication (hereinafter referred to as chat) with the first user terminal 2 (in Fig. 1, "INVITATION MAIL"), from the transmitting part 7a shown in Fig. 2 to the second user terminal 3 (S01).

At the same time that the mail is transmitted to the second user terminal 3, the telephone number and the duration ID of the first user terminal 2 are transmitted from the first user terminal 2 to the management server 5 (S02). This duration ID means the number of updates by which the data of the first user terminal 2 is updated by the updating part 20 of the management server 5.

The telephone number and the duration ID transmitted from the first user terminal 2 are associated with other data for identifying the first user terminal 2, and these other data are stored in the identifier storing part 14. Incidentally, the other data indicate a device ID which identifies the kind and the model of the user terminal, a content ID associated with a character used by the user terminal, and the like.

When the "invitation mail" is transmitted from the first user terminal 2, the CPU, not shown, of the second user terminal 3 determines whether the receiving part 6b has received the mail (S03). If the CPU determines that the receiving part 6b has not received the "invitation mail" from the first user terminal 2, the CPU executes the processing of causing the first user terminal 2 to display a picture of an indication to the effect that the mail has not been received (S04). Thus, the process comes to an end.

On the other hand, if it is determined that the mail from the first user terminal 2 has been received by the receiving part 6b of the second user terminal 3, the telephone number and the duration ID of the first user terminal 2 that are stored in the storage table and the telephone number and the duration ID of the first user terminal 2 that have been transmitted from the first user terminal 2 are compared by the comparing part 9b of the second user terminal 3 (S05).

If it is determined that the telephone number and the duration ID that have been transmitted from the first user terminal 2 and the telephone number and the duration ID of the first user terminal 2 that are stored in the storage table are the same (S06), this indicates that the data of the first user terminal 2 has not been updated. Namely, in the f irst user terminal 2 in this case, the kind of character to be used during chat has also not been updated.

For this reason, the second user terminal 3 extracts from the storage table 8b a content ID corresponding to the character 4 used by the first user terminal 2 (S07).

Then, the second user terminal 3 displays the character 4 of the first user terminal 2 by means of the display part 11b (S15).

On the other hand, if it is determined in Step 06 by the comparing part 9b of the second user terminal 3 that the telephone number and the duration ID that have been transmitted from the first user terminal 2 and the telephone number and the duration ID of the first user terminal 2 that are stored in the storage table 8b of the second user terminal 3 are mutually different (S06), this indicates that the data of the first user terminal 2 has been updated.

Then, the second user terminal 3 needs to acquire the character 4 which is being used by the first user terminal 2. Accordingly, the CPU 23 of the management server 5 executes the processing of causing the display part 11b of the second user terminal 3 to display a picture for selecting whether to download the character 4 (S08).

If it is determined that the character 4 is not to be downloaded from the second user terminal 3 (S09), an arbitrary character stored in the storage table 8b of the second user terminal 3 is automatically selected (S10).

On the other hand, if it is determined that the character 4 is to be downloaded, the guiding part 21 of the management server 5 requests downloading of the character 4 from the character providing server 30 which handles a content ID associated with the character 4, on the basis of the telephone number of the first user terminal 2 (S11). At this time, the link to the character providing server 30 is extracted from the link table 28.

Then, the CPU 23 of the management server 5 determines whether downloading has been completed, after a predetermined time has passed (S12). If downloading has not been completed, the process waits for downloading to come to an end.

If it is determined that downloading has been completed, the CPU 23 of the management server 5 causes the display part 11b of the second user terminal 3 to display a picture of an indication to the effect that the acquisition of the character 4 has been completed (S13).

Then, the downloaded character 4 is distributed to the second user terminal 3 (S14), and is displayed on the display part 11b of the second user terminal 3 (S15).

Through the above-described process, the second user terminal 3 can display on the display part 11b the character 4 used by the first user terminal 2.

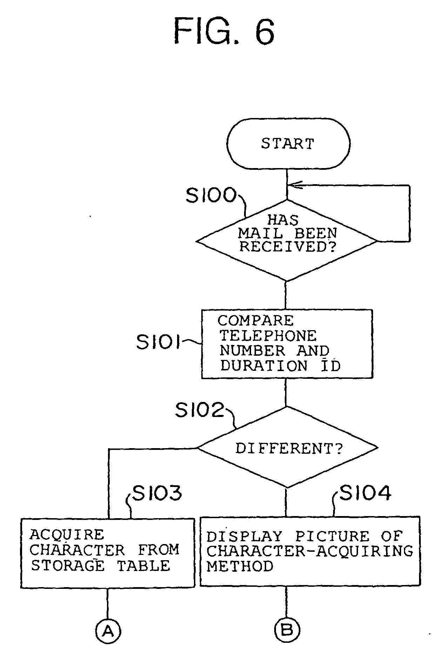

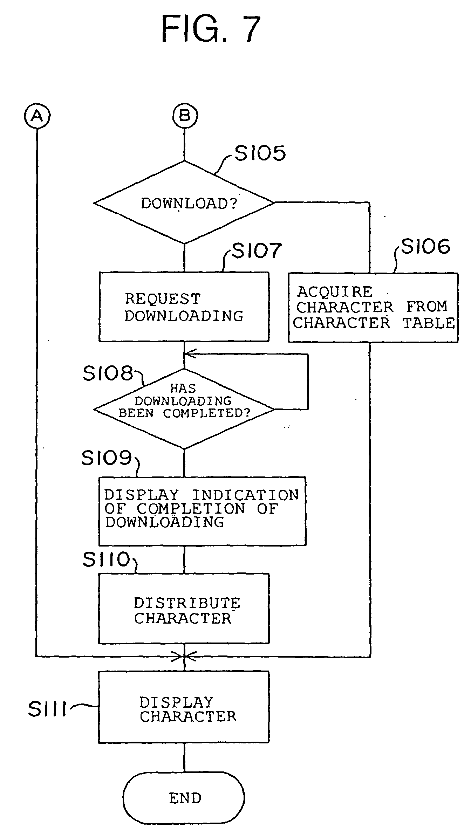

The sequence in which the first user terminal 2 acquires the character 4 of the second user terminal 3 will be described below with reference to the flowchart shown in Figs. 6 and 7.

First, the CPU, not shown, of the first user terminal 2 determines (S100) whether the first user terminal 2 has received a mail indicating the acceptance of a request for chat (in Fig. 1, "INVITATION ACCEPTANCE MAIL") from the transmitting part 7b of the second user terminal 3 (S100). If the above-mentioned CPU determines that the "INVITATION ACCEPTANCE MAIL" has not been received, the CPU waits for the "INVITATION ACCEPTANCE MAIL" from the second user terminal 3.

If the CPU, not shown, of the first user terminal 2 determines that the first user terminal 2 has received the "INVITATION ACCEPTANCE MAIL" from the second user terminal 3, the CPU executes the processing of comparing through the comparing part 9a of the first user terminal 2 the telephone number and the duration ID of the second user terminal 3 that are stored in the storage table 8a and the telephone number and the duration ID that have been transmitted from the second user terminal 3 (S101).

If it is determined (S102) that the telephone number and the duration ID that have been transmitted from the second user terminal 3 and the telephone number and the duration ID of the second user terminal 3 that are stored in the storage table 8a are not mutually different, i.e., are the same, this indicates that the data of the second user terminal 3 has not been updated. Namely, in the second user terminal 3 in this case, the kind of character to be used during chat has also not been updated.

For this reason, since the character 4 associated with the telephone number of the first user terminal 2 is stored in the storage table 8a of the first user terminal 2, the processing of extracting the character used by the second user terminal 3 from the storage table is executed by the CPU (S103).

Then, the processing of displaying the character extracted in the above-mentioned step on the display part 11a of the first user terminal 2 is executed by the CPU (S111).

On the other hand, if it is determined in Step 102 that the telephone number and the duration ID that have been transmitted from the first user terminal 2 and the telephone number and the duration ID that are stored in the identifier storing part 14 are mutually different, this indicates that the data of the second user terminal 3 has been updated.

Then, the first user terminal 2 needs to acquire the character which is being used by the second user terminal 3. Accordingly, the CPU 23 of the management server 5 executes the processing of causing the display part 11a of the first user terminal 2 to display a picture for selecting whether to download the character (S104). The user selects whether to download the character (S105).

If it is determined that the character is not to be downloaded from the first user terminal 2, the character that has been stored in the storage table 8a of the first user terminal 2 is automatically selected (S106). Then, the CPU, not shown, of the first user terminal 2 executes the processing of displaying the extracted character on the display part 11a (S111).

On the other hand, if it is selected that the character 4 is to be downloaded, the guiding part 21 of the management server 5 executes the processing of requesting downloading of the character from the character providing server 30 which handles a content ID associated with the character indicative of the second user terminal 3, on the basis of the telephone number of the second user terminal 3 (S107).

Then, after a predetermined time has passed, the CPU 23 of the management server 5 executes the processing of determining whether downloading has been completed (S108). If downloading has not been completed, the process waits for downloading to come to an end.

If it is determined that downloading has been completed, the CPU 23 of the management server 5 executes the processing of causing the display part 11a of the first user terminal 2 to display a picture of an indication to the effect that the acquisition of the character 4 has been completed (S109).

Then, the CPU 23 distributes the downloaded character to the first user terminal 2 (S110), and the distributed character is displayed on the display part 11a of the first user terminal 2 (S111).

Through the above-described process, the character that is being used by the second user terminal 3 can be appropriately displayed on the display part 11a of the first user terminal 2.

Namely, according to the communication information sharing system 1 of the present embodiment, the character can be shared between the first user terminal 2 and the second user terminal 3.

Accordingly, it is also possible to provide the effect of emphasizing a message from a sender. For example, when a message representative of a pleasing sensation is to be transmitted from the first user terminal 2 to the second user terminal 3, a character representative of a pleasing condition may be transmitted together with the message so that the pleasing sensation can be effectively transmitted from the first user terminal 2.

In addition, according to the communication information sharing system 1 of the present embodiment, the necessary character needs only to be downloaded when necessary, so that the user terminal can display a character of a remote communication terminal on its own display part without storing the character in its memory. Of course, if it is troublesome to download a character each time chat is performed, only a character to be frequently used may be stored in the memory.

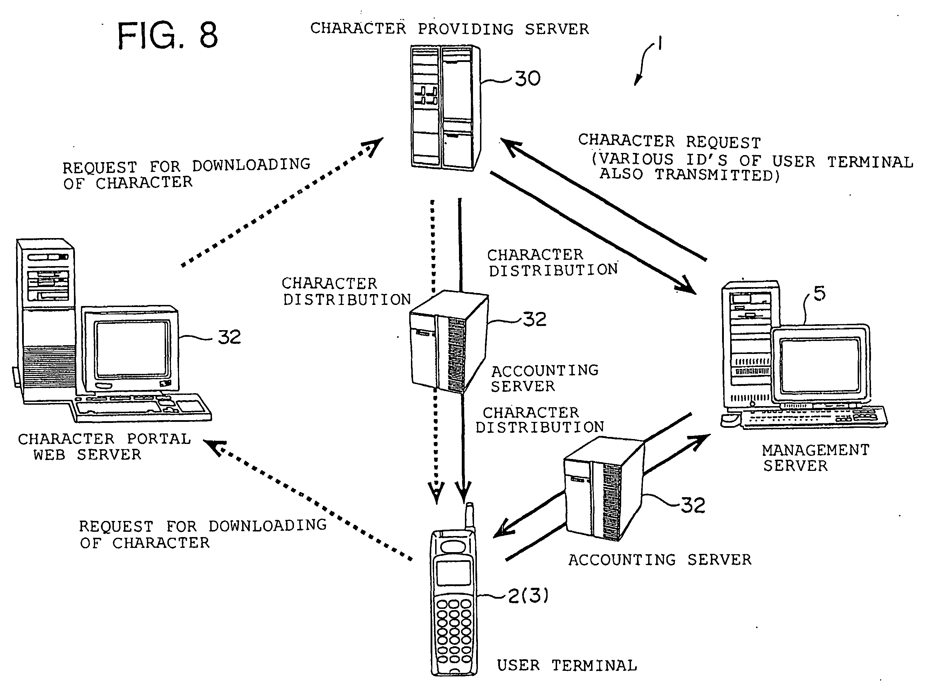

The present embodiment has been described on the assumption that when a character is to be downloaded, the management server 5 makes a request for downloading from the character providing server 30, but it is also possible to adopt a construction in which, as shown in Fig. 8, the user terminal directly requests downloading of a character from the character portal Web server 31 which handles a list of links to the character providing server 30, and the character is distributed from the character providing server 30.

In addition, an accounting system for acquiring a character can also be added to the communication information sharing system 1 of the present embodiment.

For example, as shown in Fig. 8, it is possible to adopt a construction in which the communication information sharing system 1 of the present embodiment is provided with an accounting server 32 which charges distribution fees for characters, and it is possible to adopt constructions such as a construction in which this accounting server 32 is installed between the user terminal and the management server 5 so that charging is performed at the same time that downloading of a character is requested from the user terminal and a construction in which the accounting server 32 is installed between the character providing server 30 and the user terminal so that charging is performed at the same time that a character is provided from the character providing server 30.

Then, the users are asked to pay the charged character distribution fees together with the charges of their mobile telephones.

It is also possible to adopt other constructions which allow users to freely download characters if the users pay predetermined amounts for given terms, such as monthly amounts or annual amounts.

### <Second Embodiment>

A communication information sharing system according to the present embodiment is a communication system which enables schedule data to be shared between at least two user terminals. The communication information sharing system according to the present embodiment has approximately the same construction as the communication information sharing system according to the first embodiment. Accordingly, the same portions are denoted by the same reference numerals as those used in the first embodiment, and the description of the same portions as those of the first embodiment is omitted for the sake of convenience.

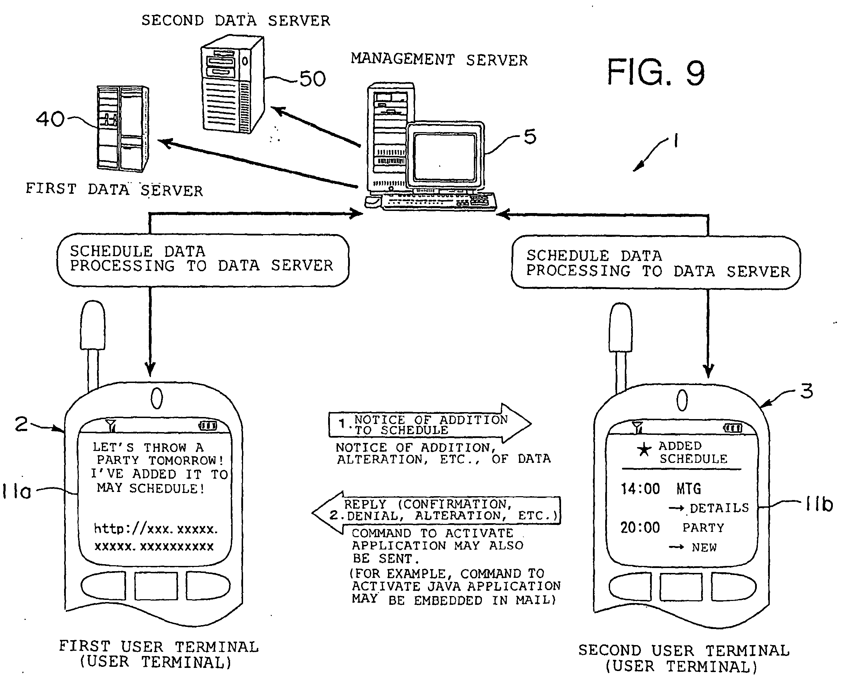

As shown in Fig. 9, the communication means of the communication information sharing system 1 according to the present embodiment is assumed to be chat which enables conversational sentences to be communicated in real time between a user terminal (hereinafter referred to as the first user terminal) 2 which requests alteration of schedule data of one user and a user terminal (hereinafter referred to as the second user terminal) 3 which provides schedule data and receives altered schedule data.

The first user terminal 2 registers schedule data of the user in a first data server 40 via a network. Similarly, the second user terminal 3 also registers schedule data of its user in a second data server 50 via the network. Identifiers corresponding to their respective schedulers are added to these schedule data. In the present embodiment, the scheduler of the first user terminal 2 and the scheduler of the second user terminal 3 are assumed to be mutually different.

Furthermore, the communication information sharing system 1 according to the present embodiment is provided with the management server 5 which enables the mutual schedule data to be shared between the first user terminal 2 and the second user terminal 3.

As shown in Fig. 9, if neither the first user terminal 2 nor the second user terminal 3 has their own schedulers, or if either of the first user terminal 2 and the second user terminal 3 does not correspond to the scheduler of the other, the management server 5 enables both of them to share their schedule data, by downloading the necessary schedulers or converting schedulers to corresponding formats.

The system concept of the communication information sharing system 1 of the present embodiment is as described above. The system construction of the communication information sharing system 1 according to the present embodiment will be described below with reference to Fig. 2. In the following, as to the constructions of the management server 5 and each of the user terminals, the description of the same portions as the above-described portions of the management server 5 of the first embodiment will be omitted.

First, the system construction of the management server 5 of the present embodiment shown in Fig. 2 will be described below. The management server 5 has the receiving part 12 which receives various kinds of data transmitted from the first user terminal 2 or the second user terminal 3 and the replying part 13 which returns various kinds of processing performed in the management server 5 to the first user terminal 2 or the second user terminal 3.

The management server 5 is also provided with the identifier storing part 14 which stores various kinds of identifiers contained in data transmitted from the user terminals. The identifier storing part 14 has the content ID table 15 which stores identifiers associated with the schedule data transmitted from both user terminals, i.e., content IDs, the device ID table 16 for identifying the individual user terminals, and the profile ID table 17 which stores profile IDs associated with the device IDs.

Incidentally, all of these IDs are associated. Accordingly, if the management server 5 is to identify a user terminal, the management server 5 can identify the user terminal by tracing transmitted IDs.

Further, the management server 5 is provided with the identifier sharing part 29 which compensates for the difference between content IDs of schedule data so that a content ID of schedule data requested from one of the user terminals and a content ID of the scheduler of the one coincide with each other.

In this manner, by causing the content ID of the scheduler of the second user terminal 3 which is requested from the first user terminal 2 and a content ID of the scheduler of the first user terminal 2 to coincide with each other, the schedule data of one of the user terminals and the schedule data of the other can be shared by the mutual users.

In addition, the management server 5 is provided with the guiding part 21. If the content ID table 15 does not have a content ID associated with the schedule data requested from the first user terminal 2, this guiding part 21 performs the processing of downloading the necessary scheduler from a server which performs provision / distribution of various kinds of schedulers.

Furthermore, a link table 28 which stores addresses linked to the first data server 40 and the second data server 50, the address of a link to the server which perform provision / distribution of various kinds of schedulers, the addresses of links to download sites, the addresses of links to portal webs, and the like, is provided in the guiding part 21.

The system construction of the management server 5 is as described above.

The system constructions of the first user terminal 2 and the second user terminal 3 of the present embodiment will be described below. In the following description, since the first user terminal 2 and the second user terminal 3 have similar system constructions, both user terminals will be collectively referred to as the user terminal.

As shown in Fig. 2, the user terminal of the present embodiment has the receiving part 6a, 6b and the transmitting part 7a, 7b for performing communication of data with a remote communication terminal. In these receiving part 6a, 6b and transmitting part 7a, 7b, the communication of schedule data for the users of the respective terminals, in addition to conversational sentences, is carried out.

In addition, the user terminal is provided with the input part 10a, 10b for inputting conversational sentences, and the display part 11a, 11b which displays a conversational sentence or schedule data transmitted from a remote communication terminal.

The system construction of the user terminal is as described above.

The hardware constructions of the management server 5, the first user terminal 2 and the second user terminal 3 in the present embodiment are the same as those of the first embodiment, the same description is omitted.

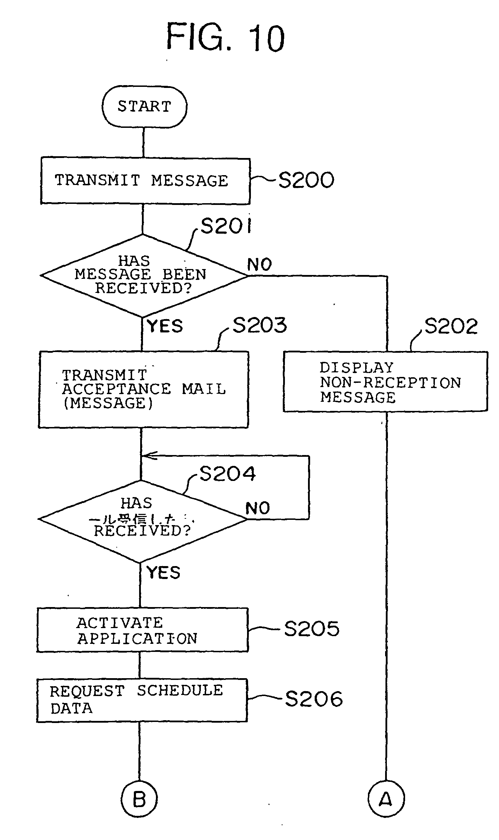

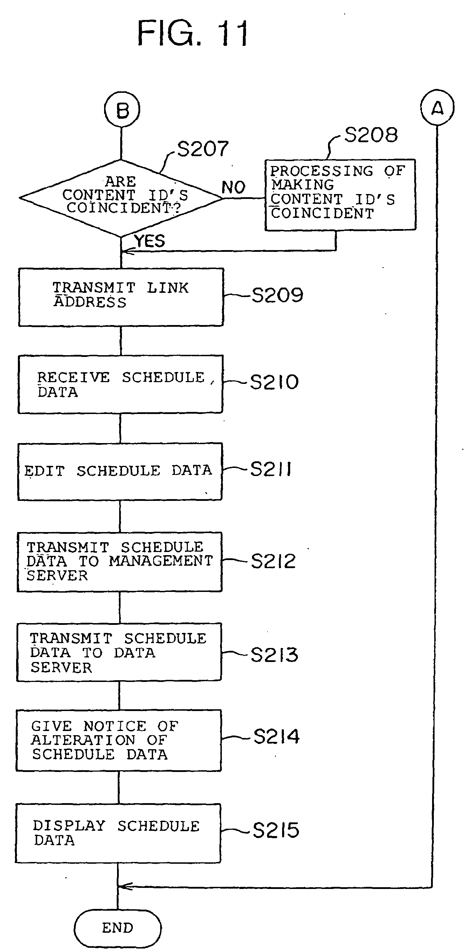

A communication information sharing method which operates the communication information sharing system 1 according to the present embodiment will be described with reference to the flowchart shown in Figs. 10 and 11.

First, the CPU, not shown, of the first user terminal 2 executes the processing of transmitting a message which requests alteration of or addition to a schedule, by means of chat from the transmitting part 7a of the first user terminal 2 shown in Fig. 2 to the second user terminal 3 (S200).

When the message is transmitted from the first user terminal 2, the CPU, not shown, of the second user terminal 3 determines whether the receiving part 6b has received the message (S201). If the CPU determines that the receiving part 6b has not received the message from the first user terminal 2, the CPU executes the processing of causing the display part 11a of the first user terminal 2 to display a picture to the effect that the message has not been received (S202).

On the other hand, if the CPU, not shown, of the second user terminal 3 determines that the receiving part 6b has received the mail from the first user terminal 2, the CPU executes the processing of transmitting a reply mail to the request for alteration of or addition to the schedule, from the second user terminal 3 (S203).

When the receiving part 6a of the first user terminal 2 receives the reply mail, the CPU, not shown, of the first user terminal 2 determines whether the mail has been received at the receiving part 6a (S204). If the CPU, not shown, of the first user terminal 2 determines that the mail has not been received at the receiving part 6a, the CPU waits for the mail to be received.

On the other hand, if the CPU, not shown, of the first user terminal 2 determines that the mail has been received at the receiving part 6a, the CPU activates an application stored in a ROM, not shown, of the first user terminal 2 (S205). An application for requesting schedule data registered in the data servers from both user terminals to the management server 5 is stored in the ROM of each of the first user terminal 2 and the second user terminal 3 in the present embodiment. This application is executed by the CPU, not show, of each of the user terminals.

If the above-mentioned application is executed by the CPU of the first user terminal 2, the application requests the management server 5 to acquire the schedule data registered by the second user terminal 3 (S206).

The management server 5 which has received this request determines whether the scheduler of the first user terminal 2 and the scheduler of the second user terminal 3 which has registered the requested schedule data are the same as or compatible with each other (S207). Namely, it is determined here whether the content ID associated with the scheduler of the first user terminal 2 and the content ID associated with the scheduler of the second user terminal 3 coincide with each other.

If the CPU 23 of the management server 5 determines that both content IDs do not coincide, the processing of causing these content IDs to coincide with each other is performed (S11).

As this processing, for example, the processing of downloading a scheduler applicable to the second user terminal 3 from a server site which provides / distributes schedulers can be adopted. This processing is preferably executed by a program stored in the ROM 22. In addition, as this processing, the conversion processing of causing both content IDs to coincide with each other by means of a predetermined program can be adopted.

Then, after both content IDs have coincided, the process proceeds to Step 209.

On the other hand, if the CPU 23 of the management server 5 determines in Step 207 that both content IDs coincide with each other, the CPU 23 of the management server 5 transmits to the first user terminal 2 an address to be linked to the second data server 50 which stores the schedule data of the second user terminal 3 (S209).

If this address is received by the receiving part 6a of the first user terminal 2 (S210), it is determined that the first user terminal 2 has acquired the schedule data. Then, the acquired schedule data is edited at the first user terminal 2 (S211).

When the editing of the schedule data is completed, the CPU, not show, of the first user terminal 2 executes the processing of transmitting the schedule data from the transmitting part 7a to the management server 5 (S212).

Then, when the schedule data is received, the CPU 23 of the management server 5 executes the processing of transmitting the schedule data to the second data server 50 (S213).

The second data server 50 which has received the schedule data notifies the second user terminal 3 that the schedule data has been edited (S214). Incidentally, it is assumed that the processing of notification of the schedule data is performed by a CPU, not shown, which is provided in the second data server 50.

Then, when the receiving part 6b of the second user terminal 3 receives the schedule data transmitted from the second data server 50, the CPU of the second user terminal 3 performs the processing of causing the display part 11b to display this schedule data (S215).

The processing process of the communication information sharing system according to the present embodiment is as described above.

As described above, since the communication information sharing system according to the present embodiment is provided with the management server 5 which manages the link to the first data server 40 or the second data server 50, even if the schedule data of the first user terminal 2 and the second user terminal 3 exist at different locations, both user terminals can share the schedule data.

It is to be noted that although in the present embodiment the content IDs of the schedule data are converted in the management server 5, this conversion processing may also be performed by the application of each of the user terminals.

In addition, according to the communication information sharing system of the present embodiment, since edited schedule data can be communicated among a plurality of user terminals, a user who has received the edited schedule data can omit the process of again inputting an edited content. Accordingly, erroneous input can be prevented.

Furthermore, since the management server 5 manages content IDs, profile IDs and device IDs which identify user terminals, data conversion can also be effected in the first data server 40 or the second data server 50. Accordingly, it is possible to lighten the burden of providing data converting functions in the respective user terminals.

### Industrial Applicability

The invention can be used for information distribution in mobile terminals such as mobile telephones provided with display functions connectable to networks.

## Claims

1. A communication information sharing system which enables data to be communicated between at least two user terminals comprising:
a management server which manages identifiers added to information symbolic of the respective user terminals,
the management server including identifier sharing means for causing an identifier to be used by one of the user terminals for transmission of data and an identifier to be used by another user terminal for reception of data to coincide with one another.

2. A communication information sharing system including at least two user terminals connected via a network to perform communication of data therebetween, and a management server which performs management of identifiers added to information symbolic of the respective user terminals comprising:
transmitting means for transmitting the identifiers together with the data;
receiving means for receiving the identifiers;
identifier sharing means for causing an identifier to be returned to another of the user terminals to coincide with an identifier transmitted from one of the user terminals;
replying means for returning the coincident identifier;
receiving means for receiving the identifier;
acquiring means for acquiring information associated with the identifier; and
outputting means for outputting the information.

3. A management server in a communication information sharing system which manages identifiers respectively added to information symbolic of at least two user terminals which perform communication of data therebetween comprising:
receiving means for receiving an identifier transmitted from a remote communication terminal;
identifier sharing means for causing the identifier and an identifier to be returned to coincide with each other;
guiding means for performing guidance for acquiring, on the basis of the coincident identifier, information associated with the identifier; and
replying means for transmitting the coincident identifier to another of the user terminals.

4. A user terminal in an information communication system, which constitutes each of at least two transmission- and reception-side user terminals which perform communication of data therebetween via a network comprising:
identifier storing means for storing information symbolic of a remote communication terminal and an identifier associated with the information; and
comparing means for comparing the information with information stored previously in the identifier storing means
the user terminal acquiring predetermined information on the basis of a comparison result.

5. A communication information sharing system which constitutes a communication system which enables conversational sentences to be communicated between at least two user terminals comprising:
a management server which manages identifiers added to characters symbolic of the respective user terminals,
the management server including identifier sharing means for causing an identifier to be used by one of the user terminals for transmission of a conversational sentence and an identifier to be used by another of the user terminals for reception of the conversational sentence to coincide with each other.

6. A communication information sharing system which constitutes a communication system including at least two user terminals connected via a network to perform communication of conversational sentences therebetween, and a management server which performs management of identifiers added to a character symbolic of the respective user terminals comprising:
transmitting means for transmitting the identifiers together with the conversational sentences;
receiving means for receiving the identifiers;
identifier sharing means for causing an identifier to be returned to another of the user terminals to coincide with an identifier transmitted fromone of the user terminals;
replying means for returning the coincident identifier;
receiving means for receiving the identifier;
acquiring means for acquiring the character associated with the identifier; and
display means for displaying the character.

7. A communication information sharing system which constitutes a communication system which enables conversational sentences to be communicated between at least two user terminals comprising:
a management server which manages links to databases which store personal information on users,
the management server including identifier sharing means for causing identifiers of both user terminals to coincide with each other so that personal information having an identifier transmitted from one of the user terminals can be outputted at another of the user terminals.

8. A communication information sharing system according to claim 7, wherein said the personal information is information relative to schedules.

9. A communication information sharing system according to claim 7, wherein said the personal information is information relative to addresses.

10. A communication information sharing system according to any of claims 7 to 9, further comprising identifier storing means which stores identifiers of links to servers or databases which manage personal information associated with identifiers.

11. A communication information sharing system according to any of claims 1 to 3, 5 to 10, wherein said the management server includes issuing means for issuing identifiers to identify the respective user terminals.

12. A communication information sharing system according to claim 11, wherein said the management server includes registering means for registering an identifier transmitted from any of the user terminals in predetermined identifier storing means when the identifier is not stored in the identifier storing means.

13. A communication information sharing system according to claim 12, wherein said the management server includes updating means for updating registration of identifiers.

14. A communication information sharing system according to claim 13, wherein said the management server displays a character symbolic of one of the user terminals on a display device of another of the user terminals.

15. A communication information sharing system according to claim 14, wherein said the identifier storing means stores identifiers which identify the respective user terminals.

16. A communication information sharing system according to claim 15, wherein said the identifier storing means stores identifiers which associate the user terminals with one another.

17. A communication information sharing system according to claim 16, wherein said the identifier storing means stores an identifier of a link to another server which manages characters associated with the respective identifiers.

18. A communication information sharing system according to any of claims 1 to 17, wherein said the at least two user terminals enable conversational sentences and characters to be communicated in real time.

19. A communication information sharing method to be performed by at least two user terminals connected via a network to per form communication of conversational sentences therebetween, and a management server which performs management of identifiers added to a character symbolic of the respective user terminals comprising:
a step of transmitting the identifiers together with the conversational sentences;
a step of receiving the identifiers;
a step of causing an identifier to be returned to another of the user terminals to coincide with an identifier transmitted from one of the user terminals;
a step of returning the coincident identifier;
a step of receiving the identifier;
a step of acquiring a character associated with the identifier; and
a step of displaying the character on a display device of said another user terminal.

20. A communication information sharing program computer-executable by at least two user terminals connected via a network to perform communication of conversational sentences therebetween, and a management server which performs management of identifiers added to a character symbolic of the respective user terminals comprising:
a step of transmitting the identifiers together with the conversational sentences;
a step of receiving the identifiers;
a step of causing an identi fier to be returned to another of the user terminals to coincide with an identifier transmitted from one of the user terminals;
a step of returning the coincident identifier;
a step of receiving the identifier;
a step of acquiring a character associated with the identifier; and
a step of displaying the character on a display device of said another user terminal.

21. A communication information sharing method to be performed by at least two user terminals connected via a network to perform communication of a conversational sentence therebetween, and a management server which performs management of an identifier added to personal information inputted from each of the user terminals comprising:
a step of transmitting personal information to which an identifier is added, together with the conversational sentence;
a step of receiving the personal information;
a step of causing the identifier added to the personal information to coincide with an identifier of personal information to be returned to another of the user terminals;
a step of returning personal information based on the coincident identifier;
a step of receiving the personal information;
a step of editing the personal information;
a step of transmitting the personal information to another of the user terminals; and
a step of displaying the personal information on a display device of the user terminal.

22. A communication information sharing program to be executed by a computer of a management server which performs management of identifiers added to personal information inputted from at least two user terminals connected via a network to per form communication of conversational sentences therebetween comprising:
a step of transmitting personal information to which an identifier is added, together with the conversational sentence;
a step of receiving the personal information;
a step of causing the identifier added to the personal information to coincide with an identifier of personal information to be returned to another of the user terminals;
a step of returning personal information based on the coincident identifier;
a step of receiving the personal information;
a step of editing the personal information;
a step of transmitting the personal information to another of the user terminals; and
a step of displaying the personal information on a display device of the user terminal.
